## Europäisches Patentamt

## European Patent Office

## Office européen des brevets

(19)

(11) Veröffentlichungsnummer: **0 047 535**
**A2**

(12)

# EUROPÄISCHE PATENTANMELDUNG

(21) Anmeldenummer: **81108826.9**

(22) Anmeldetag: **22.12.80**

(51) Int. Cl.³: **B 01 D 17/02,** C 02 F 1/40
// E03F5/16

(30) Priorität: **14.04.80 DE 3014204**
**23.06.80 DE 3023384**

(43) Veröffentlichungstag der Anmeldung: **17.03.82**
**Patentblatt 82/11**

(84) Benannte Vertragsstaaten: **AT BE CH DE FR GB IT LI LU**
**NL SE**

(60) Veröffentlichungsnummer der früheren Anmeldung nach
Art. 76 EPÜ: **0037855**

(71) Anmelder: **Hammerschmitt, Nikolaus, Kölner**
**Strasse 138, D-5350 Euskirchen (DE)**

(72) Erfinder: **Hammerschmitt, Nikolaus, Kölner Strasse 138,**
**D-5350 Euskirchen (DE)**

(54) **Abscheider für Leichtflüssigkeiten.**

(57) Im Abscheideraum eines Ölabscheiders wird der Wasserspiegel vom Öl bei 0,85 Dichte je 1 cm über dem Wasserspiegel 5,6 cm nach unten verdrängt, bei 0,90 Dichte 9 cm.

Um die Ölschichtdicke nach unten mit Sicherheit zu begrenzen, ist im Bereich der Wasserspiegelschwankungen ein grossvolumiger Ausgleichbehälter angeordnet, der das an der Ölsäulensohle am unteren Überlauf (010) überlaufende Öl aufnimmt. Bei fallendem Wasserspiegel fliesst dieses Öl in den Ölsammelraum (21) zurück. Beim folgenden Ansteigen des Wasserspiegels fliesst das Öl über den Ölablauf (04) ab. Durch die ständigen Wiederholungen werden die Wasserspiegelschwankungen für den Ölabzug nutzbar gemacht.

Diese pumpenartige Wirkung wird dadurch erreicht, dass im grossvolumigen, im Bereich der Wasserspiegelschwankungen liegenden Ausgleichbehälter (21a) durch den sinkenden Wasserspiegel ein Unterdruck erzeugt wird. Durch den steigenden Wasserspiegel entsteht im engen Querschnitt des ebenfalls im Bereich der Wasserspiegelschwankungen liegenden Ölablaufs (04) ein Überdruck.

Die Rinne (02c) im Wasserablaufquerschnitt begünstigt den Pumpeneffekt, weil sich der Hub wesentlich vergrössert, ohne die Durchlaufmenge zu erhöhen.

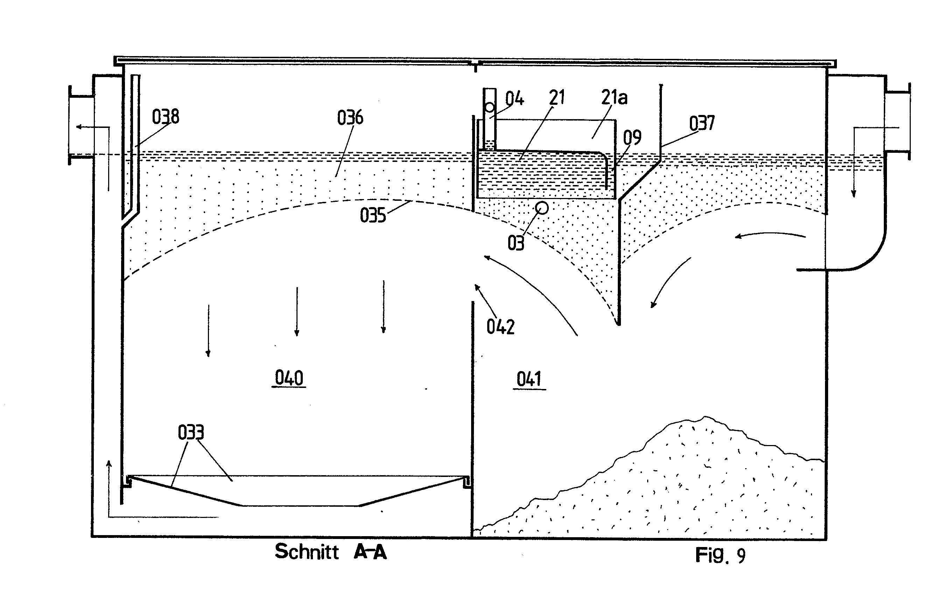

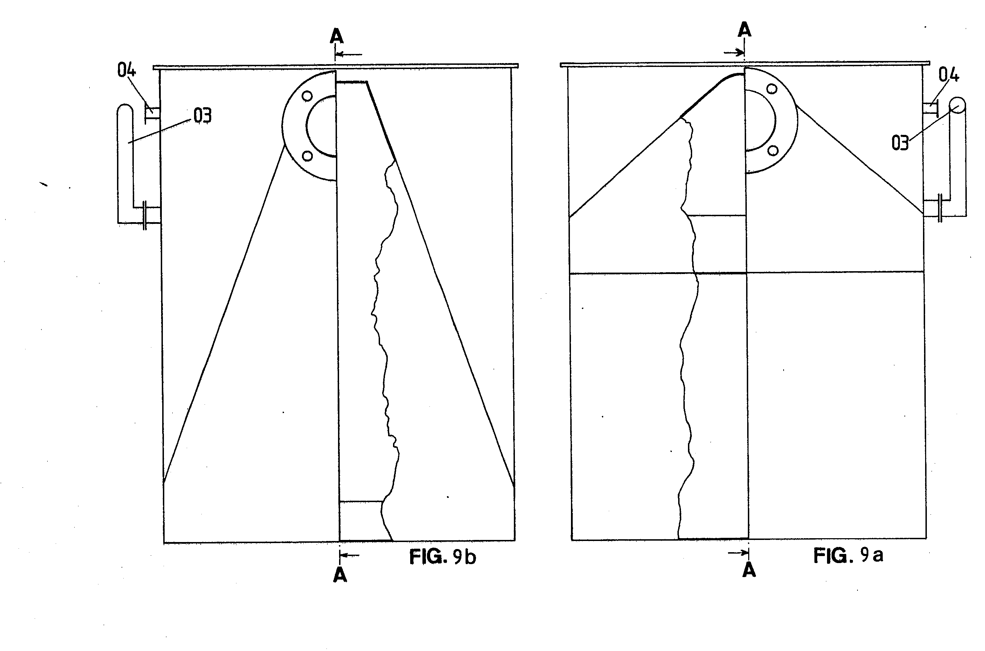

In den (Fig. 8b, 5, 7, 9, 10 und 11) sind ergänzende Ausführungsbeispiele dargestellt, wobei u. a. auf die Ölstände in den (Fig. 9, 10 und 11) hingewiesen wird.

Schnitt A-A

SCHNITT AA

0047535

Anmelder:     Herr Nikolaus Hammerschmitt

              Kölner Strasse 13A

              5350 Euskirchen

Bezeichnung:    Abscheider für Leichtflüssigkeiten

Vorliegende Erfindung bezieht sich auf eine Ergänzungs- bzw. Zusatzerfindung zur Durchführung des Verfahrens nach der Anmeldung P 29 51 205.8, sowie der Zusatzanmeldungen P 3o 14 2o4.2 und P 3o 23 384.2 und der europäischen Anmeldungen 80 10 80?8.7 und 81 1o 1179.0 zum Trennen eines Flüssigkeitsgemisches bestehend aus Leicht- und Schwerflüssigkeit und gegebenenfalls Schlamm, sowie zum getrennten Abführen der Flüssigkeiten.

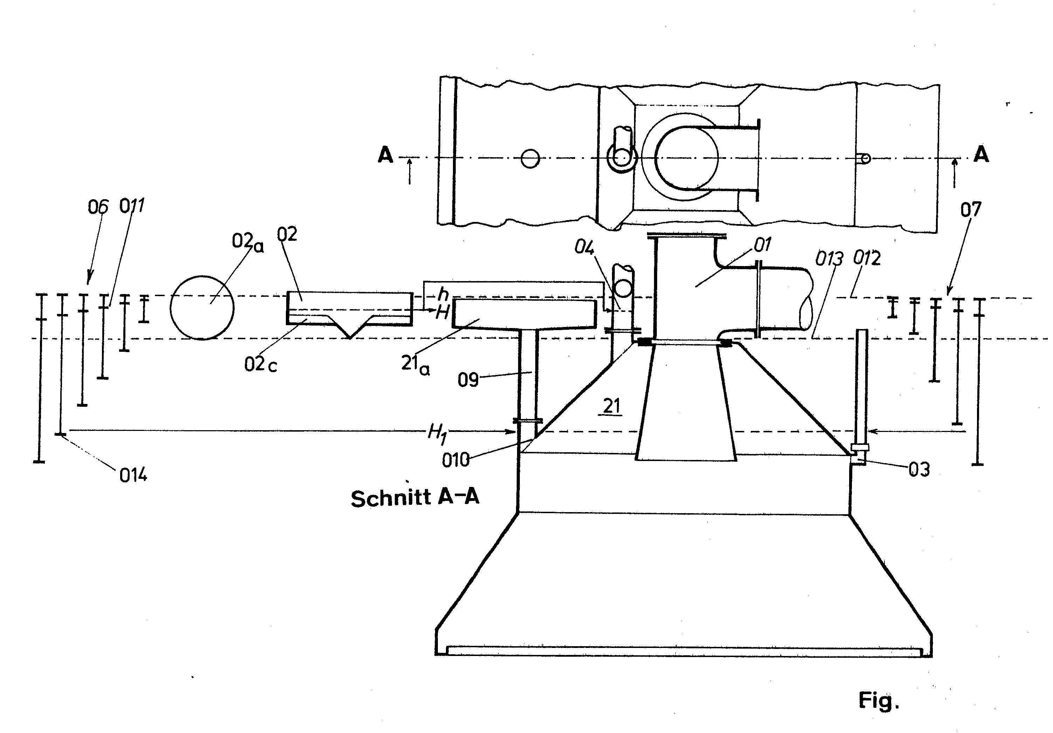

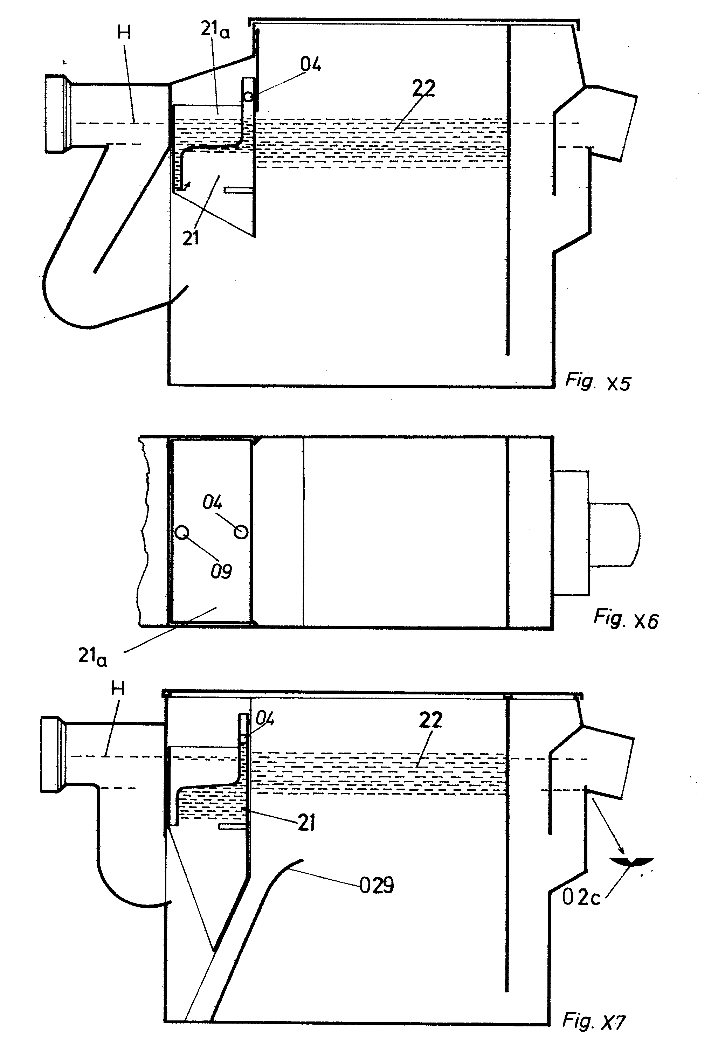

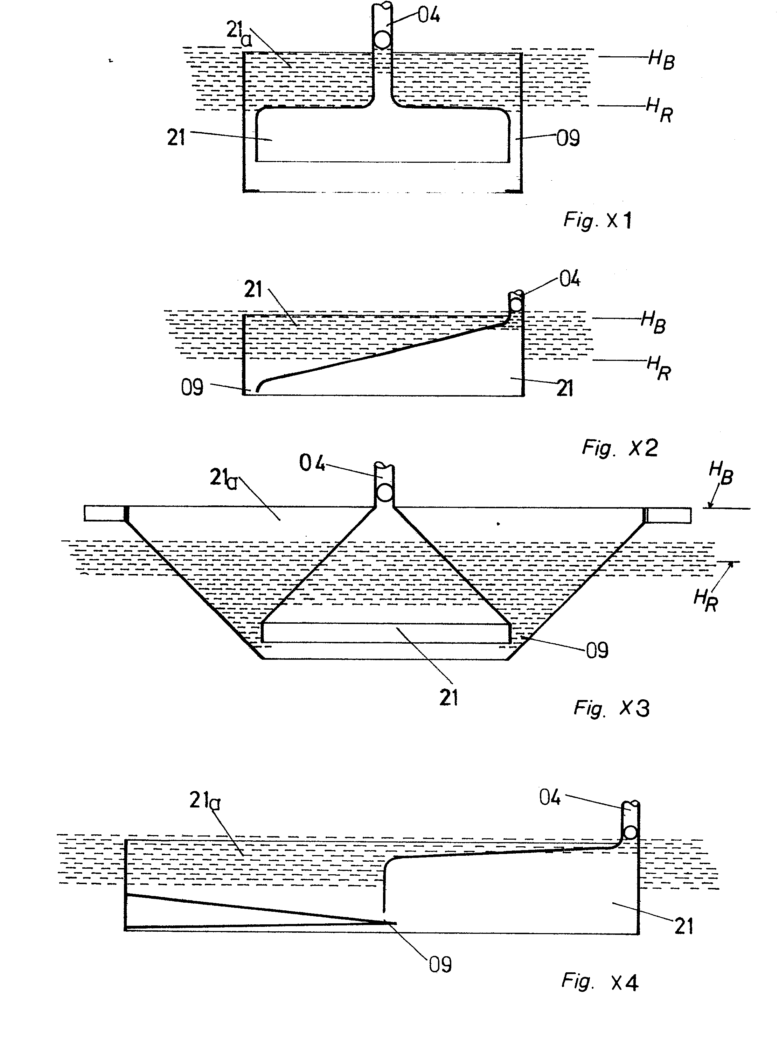

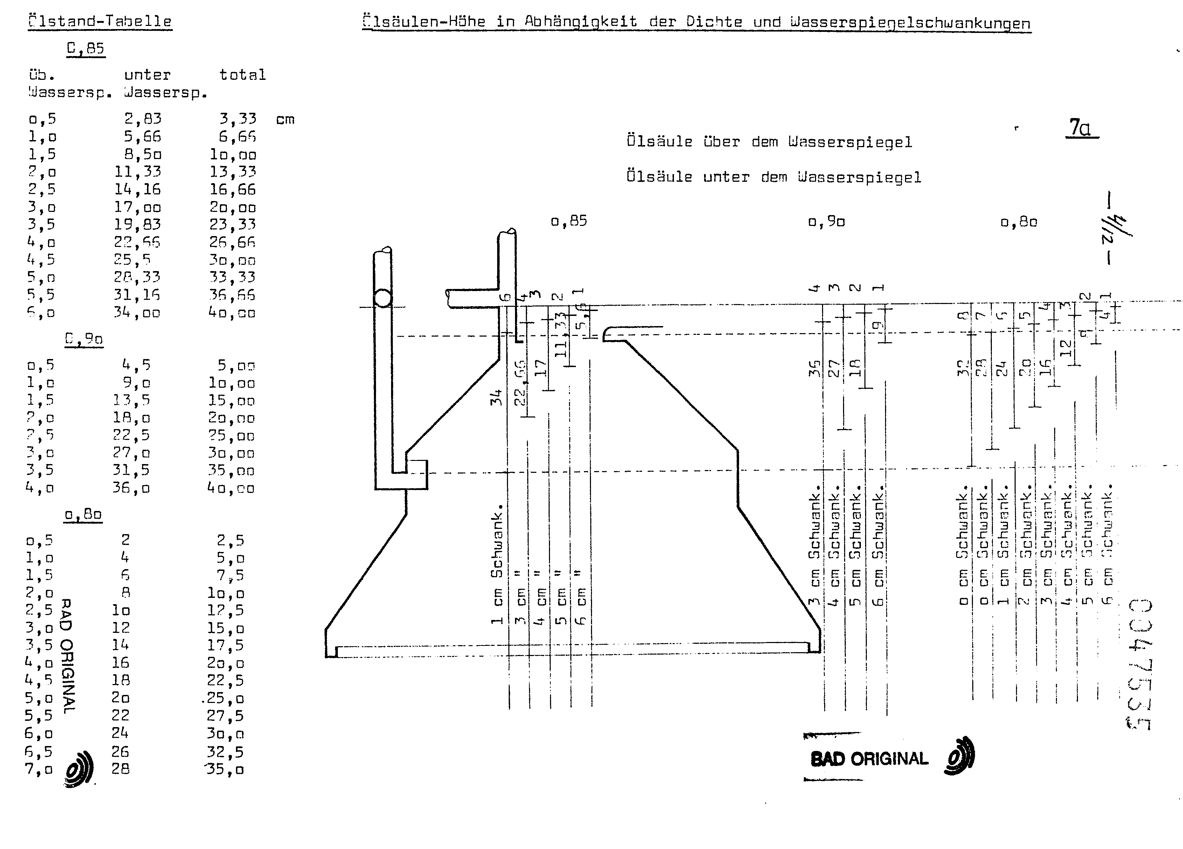

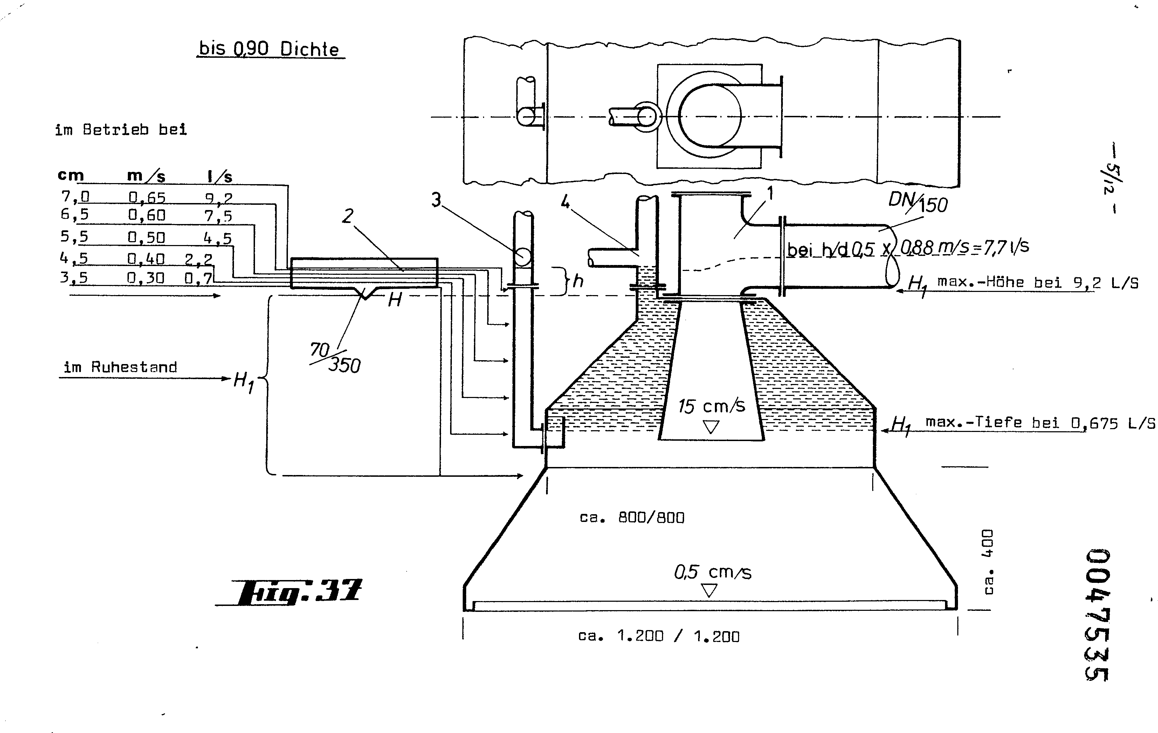

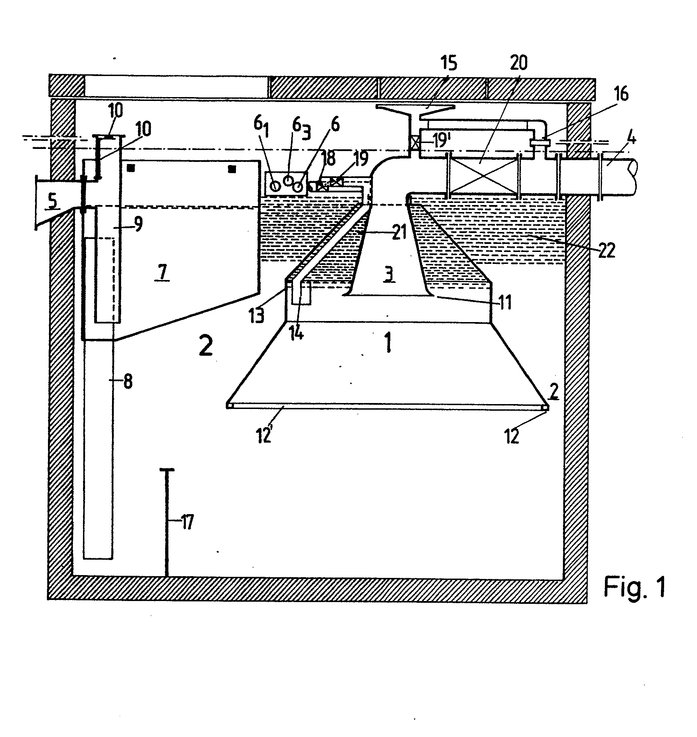

Derartige Trennvorrichtungen (vorwiegend als Öl- oder Benzinabscheider bezeichnet) haben die Eigenschaft, daß die Leichtflüßigkeit (Öl) den Wasserspiegel im Abscheideraum nach unten verdrängt, d. h. der größte Teil des im Trennraum angesammelten Öls schwimmt auf dem verdrängten Wasserspiegel also unter dem Wasserablauf ( äußerer Wasserspiegel ) siehe Figur 1 ( 21-22).

Je nach Dichte beträgt die Ölsäule, z.B. bei einer Dichte von 0,85, unter dem Wasserspiegel 85% der Ölsäulenhöhe und 15% über dem Wasserspiegel.

Zum Vergleich:

| Dichte | üb. Wasserspiegel | unt. Wasserspiegel | Total |
|---|---|---|---|
| 0,80 | 1,00 cm | 4,00 cm | 5,00 cm |
| 0,85 | 1,00 cm | 5,66 cm | 6,66 cm |
| 0,90 | 1,00 cm | 9,00 cm | 10,00 cm |

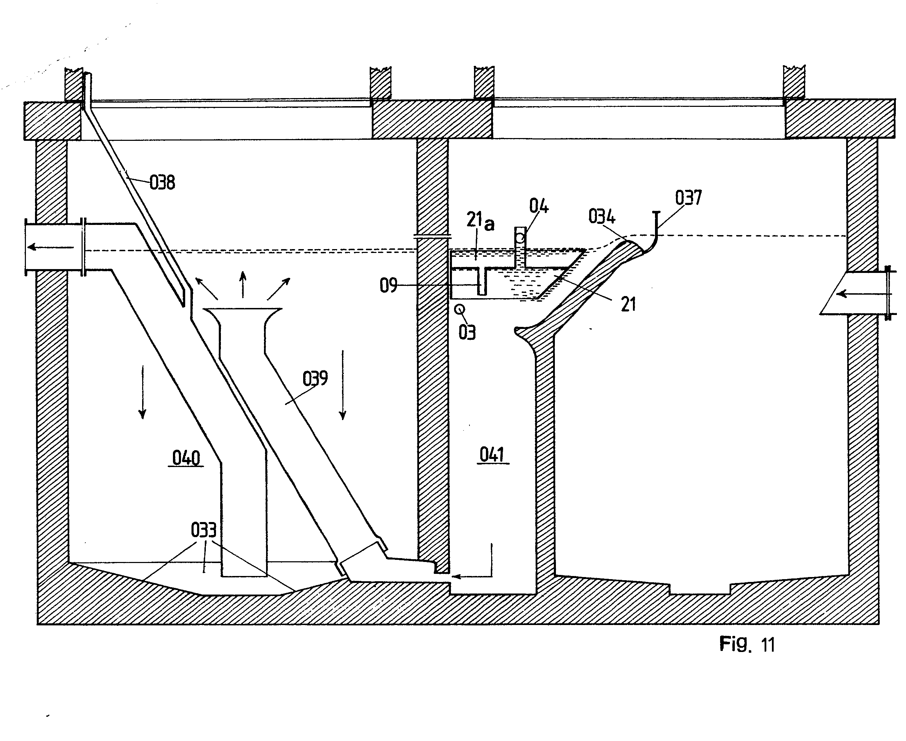

Siehe auch Tabelle und Figur 7a.

0047535

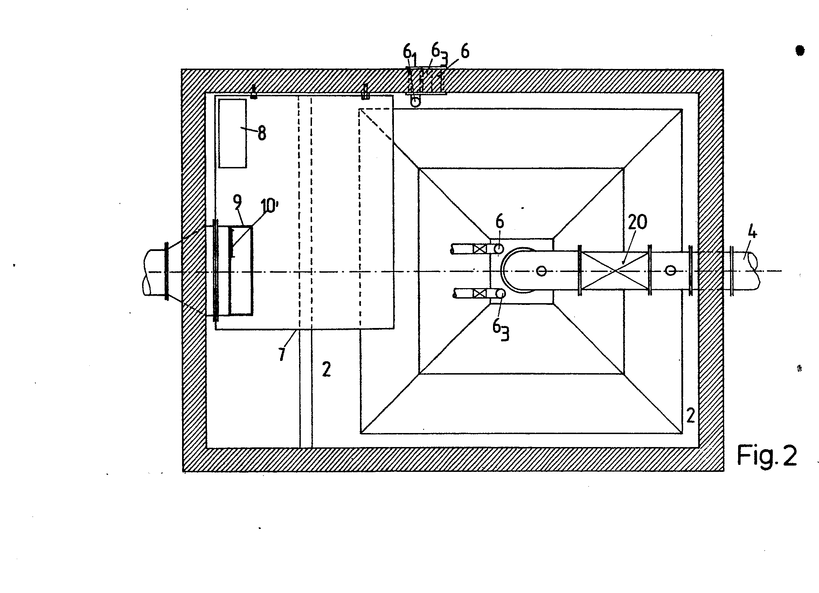

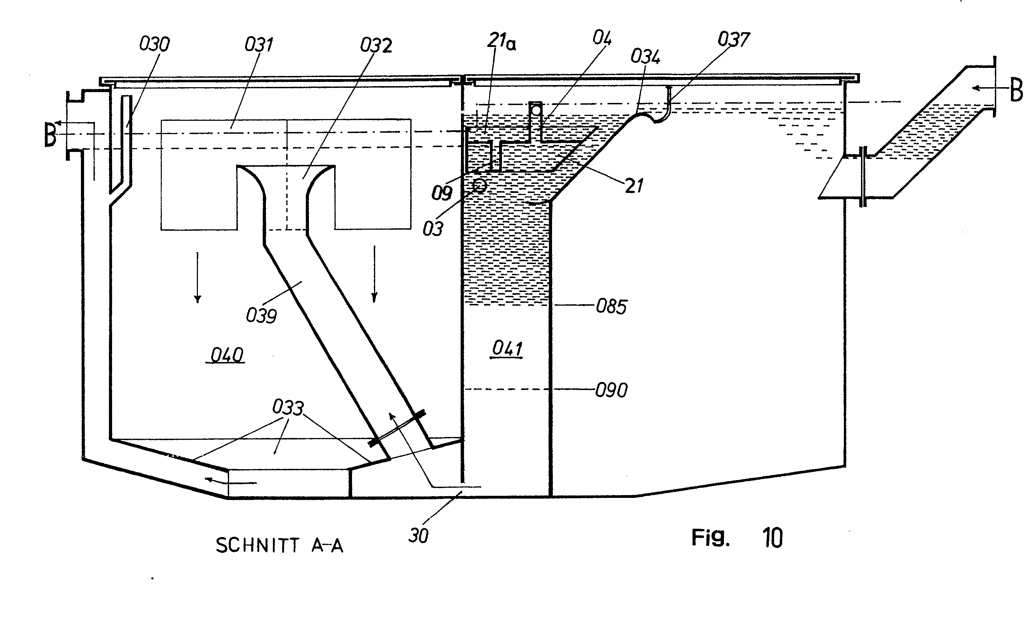

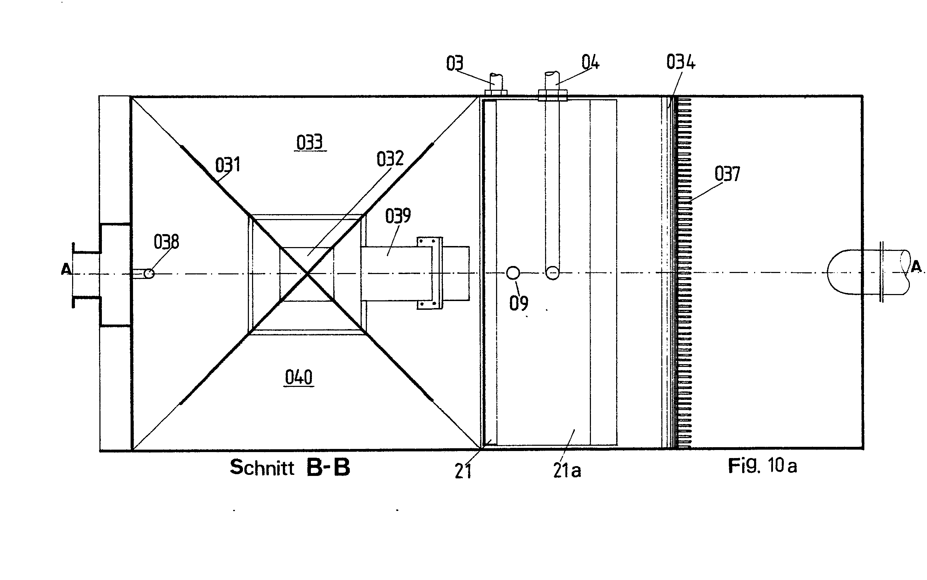

Um eine hinreichende Darstellung zu ermöglichen, wird auf die gezeigten Figuren 3 bis 8 und 7a und 8a mit den dazu gehörenden Erklärungen hingewiesen, in denen das Ölverhalten je nach den Wasserspiegelschwankungen und Öldichten gegenüber gestellt ist.

Die besonderen Merkmale der vorliegenden Erfindung bestehen darin, daß der Öltiefstand nicht nur durch den Ölsicherheitsablauf bestimmt wird, sondern, bevor das Öl den Ölsicherheitsablauf (o3) erreicht, am Ölüberlauf (olo) in den Ausgleichbehälter (21a) fließt. Bei fallendem Wasserspiegel bzw. Ruhestand der Abscheiders fließt das Öl in der Ölsammelraum (21) zurück und wird beim nächsten Wasserspiegelanstieg über den Ölabfluß (o4) abgedrückt.

Je nach der Höhe der Schwankungen und der Ölschichtdicke (22) außerhalb der Abscheiderglocke überfließt dieses Öl den Behälterrand (21a) und gelangt durch den beim fallenden Wasserspiegel entstehenden Unterdruck ebenfalls in den Ölsammelraum (21). Die ständigen Wiederholungen (Betrieb-, Ruhestand) ergeben einen pumpenartigen Effekt.

In Figur 8b sind die Höhen der Ölsäulen skalenartig (o7) dargestellt bei einer Dichte von o,9o. Dabei deuten die mittleren Linien (oll) den jeweiligen Wasserspiegel (H) an, der durch die Wasserspiegelschwankungen entsteht.

Die gestrichelte Linie (ol2) zeigt die maximale Höhe des Ölspiegel (h) und die gestrichelten Linien (ol3) den maximalen Tiefstand des Wasserspiegels (H) an.

Mit den unteren Querstrichen (ol4) ist der abgedrängte Wasserspiegel ($H_1$ - Ölsohle) innerhalb der Glocke angezeigt.

Die Unterschiede in dem Wasserspiegel (oll), die durch die unterschiedlichen Schwankungen entstehen, (je nach Durchflußmenge) betragen jeweils 1 cm, auch bei einer Öldichte von o,85 (o6).

Vergleicht man jedoch die Durchflußmenge bzw. den verdrängten Wasserspiegel ($H_1$), so wird der Unterschied der Ölsäulen zwischen o,85 und o,9o deutlich.

Durch Austausch der Ablaufrohrstücke kann der Abscheider auf die örtlichen Verhältnisse so eingestellt werden, daß sich die Ölsohle etwa im mittleren Bereich des Ölsammelraums befindet. Hierdurch ist genügend Spielraum gegeben, um ein Ablaufen von Wasser im Ölablauf zu verhindern.

Der Ölüberlauf (olo) kann nur erreicht werden, wenn die Wasserspiegelschwankungen sich im Dauerbetrieb im unteren Bereich bewegen.

Die Bestimmung der Ölschichtdicke und Abführung des Öls kann auch erreicht werden, indem man ein Tauch- und Steigrohr mit zylindrischem oder trichterartigem oben und unten offenen Hohlkörper so verbindet, daß sich das große Volumen mit dem Tauchrohr oben im Bereich der Schwankungen befindet und das Steigrohr mit dem großen Volumen nach unten gerichtet ist. Hierbei muß das Steigrohr ebenfalls im Bereich der Schwankungen liegen.

Sh. Figur X1, X2, X3 und X4. Solche und ähnliche Vorrichtungen können zum Ölabzug auch bei nachträglichen Anbauten Anwendung finden.

Sh. Figur X 5, X6 und X7. Diese Figuren zeigen Ausführungsbeispiele in denen Ölabzugvorrichtungen in herkömmliche Ölabscheider nachträglich eingebaut sind, ausgenommen die untere Trennwand (o29), weil diese absolut dicht sein muß. Diese Trennwand (o29) bildet mit der oberen Trennwand der eingebauten Ölabzugvorrichtung die Trennung zwischen Grob- und Feinabscheidung (erste und zweite Stufe).

Durch die Einkerbung (o2c) im Wasserablaufquerschnitt wird die Pumpenwirkung durch größere Wasserspiegelschwankungen erhöht, ohne daß dadurch die Durchflußmenge im unteren Schwankungsbereich nennenswert gesteigert wird.

Gleichzeitig wird verhindert, daß Ölmengen, die sich vor der Sperrwand anstauen, beim Ruhestand in den Zulauf zurück geführt werden. Durch die plötzliche Anhebung des Wasserspiegels wird ferner der Rückfluß in den Ausgleichbehälter (21a) gesperrt. Schließlich wird noch durch die Absenkung des Wasserspiegels im Ruhestand des Abscheiders das Abfließen des im Betrieb angesammelten Öls vom Ausgleichbehälter (21a) in den Ölsammelraum (21) begünstigt.

In dem Ausführungsbeispiel (8b) befindet sich der Ölspiegel (h) direkt am Ölablauf und zwar 3,25 cm über dem Wasserspiegel (H). die Ölsäule unter dem Wasserspiegel ($H_1$) beträgt 29,25 cm. Ölsäulenhöhe total 32,5 cm. Bei einer Dichte von o,9o ist hier die Ölablaufgrenze erreicht. Bei einem weiteren Absinken durch verminderte Wasserspiegelschwankungen füllt sich der Ölsammelraum nach unten an und fließt bei langanhaltenden geringen Schwankungen am Überlauf (olo) in den Ausgleichbehälter.

Die Grenze, an dem der Ölspiegel den Ölablauf nicht mehr erreicht, entspricht nach Figur (8a) einer Durchflußmenge von 2,2 L/s einschließlich einer 3 cm tiefen Rinne. Bei einer Leistung von 2,2 L/s aufwärts und o,9o Dichte fließt also kein Öl in den Ausgleichbehälter.

Bei o,85 Öldichte und 32,5 cm Ölsäule Totalhöhe beträgt nach Tabelle (7a) die Ölsäule über dem Wasserspiegel 4,87 cm. Nach Tabelle (8a) würde hierbei der Füllungsgrad der Rinne nicht voll ausgenützt. In diesem Fall (bei o,85 Dichte) könnten also lo cm Wasserspiegelschwankungen voll ausgenützt werden, ohne einen Ausgleichbehälter in Anspruch zu nehmen.

Die Alarmanlage kann am Sicherheitsablauf vor dem Altölsammeltank als Becherschaltwerk oder im Altölsammeltank als Schwimmerschaltvorrichtung angeordnet werden.

($H_B$) = Max. Wassersp. im Betrieb, ($H_R$) = Wassersp. im Ruhest.

Bei den gezeigten (Fig. 9, 9a, 9b, 1o, 1oa und 11) handelt es sich um kombinierte Schlamm- Ölabscheider. Hierbei wird das Volumen des Schlammabscheiders für die grobe Ölabscheidung und für die Ableitung des Öles ausgenutzt.

In den (Fig. 1o und 11) werden die Gewässer mit Rest- ölgehalt vom tiefsten Punkt (o3o) nach oben sanft ge- gen die Ölschicht in der Feinabscheiderstufe (o4o) geleitet, wobei sich die Ölteilchen mit der Ölschicht verbinden, während sich das Wasser gleichmäßig langsam nach unten absetzt. Um das gleichmäßig langsame Absinken des Wassers zu gewährleisten, sind am Boden dieser großdimensionierten Feinabscheiderstufe (o4o) vier schiefe Ebenen (o33) mit starkem Gefälle zur Mitte hin angeordnet.

Die Leitflächen (o31) am Ende des vierkanitgen Leit- rohres (o32) verteilen die ankommenden Wassermassen von der Mitte aus gleichmäßg nach den vier Seiten zu den vier schiefen Ebenen (o33).

Der Wasserspiegel im Schlammraum der Abscheider (Fig. 1o und 11) ist durch eine Schleuse (o34) angehoben, hierdurch wird die Strömungsgeschwindikeit stark gedrosselt und die Schwankungshöhe niedrig gehalten. Die strömungsfreie Zone vor und im Ölsammelraum (21) und die schiefe Ebene der Trennwand (o34) begünstigt die Ölzufuhr in dem Ölsammelraum. Ferner wird der Wasserspiegel über dem Schlammraum ölfrei gehalten, was sich bei Wartungsarbeiten vorteilhaft auswirkt (kein Abpumpen der Ölschicht, keine Schlammverschmutzung).

Nach dem Entleeren des Schlammraumes wird die Ölschicht der Endstufe (o4o) durch Zuführen von Frischwasser vom Ölabscheideraum in umgekehrter Richtung über die Schleu- se (o34) in den Schlammraum zurück gedrückt.

Nachdem auch der Ölabscheideraum gesäubert ist, kann nach Füllen mit Frischwasser die Anlage wieder in Betrieb genommen werden, ohne daß die Gefahr einer Abwasserverschmutzung besteht, weil das noch im Schlammraum befindliche Öl über den kontinuierlichen Ölablauf dem Ölsammeltank zugeführt wird.

Im Abscheider (Fig. 9 ) haben die Schlamm- und Ölabscheideräume einen gemeinsamen Wasserspiegel.Die schiefen Ebenen(o33) sind bei diesem Abscheider einlegbar angeordnet.

Mit den Linien (o35) ist die obere Grenze des Strömungsablaufes angedeutet; hierbei sind die strömungsfreien Zonen (o36), in denen die Ölteilchen ungehindert aufsteigen können, erkennbar.

Fig. (9) zeigt den Ölstand im Ruhestand des Abscheiders.

Fig. (11) zeigt den Abscheider im Betrieb. Hierbei ist das Öl im Ölsammelraum ( 21), je nach der Höhe der Schwankung, ganz oder teilweise über den Ölablauf in den Ölsammeltank abgedrückt. Während des Betriebes fließt neu hinzukommendes Öl kontinuierlich ab. Erst im Ruhestand gelangt das Öl aus dem oberen Ölsammelraum ( 21a) durch Absinken des Wasserspiegels in den Ölsammraum ( 21).

Fig. (1o) zeigt den max. Öltiefstand bei einem Ölunfall, während der Abscheider nicht im Betrieb ist, also nur Öl dem Abscheider zufließt.

Die obere Marke (o85) zeigt den max. Öltiefstand wenn Öl mit einer Dichte von o,85 zufließt.
Die untere Marke (o9o) zeigt den max. Öltiefstand bei einer Dichte von o,9o.

0047535

Patentansprüche

1. Verfahren zur Bestimmung der Ölschichtdicke bzw. der Öltiefe in einem Ölabscheider oder dergl. dadurch gekennzeichnet, daß das Öl, welches im unteren Bereich der
Wasserspiegelschwankungen anfällt, von einem Ausgleichbehälter (21a) aufgenommen, bei fallendem Wasserspiegel
in den Ölsammelraum (21) zurückfließt und durch den folgenden Anstieg des Wasserspiegels in den Ölabfluß (o4)
gedrückt wird.

2. Vorrichtung nach Anspruch 1 dadurch gekennzeichnet, daß
zwei zylinder- oder pyramidenartige oben und unten offene
Behälter (21 und 21a), von denen ein extrem verjüngtes
Ende (o9) mit dem großvolumigen Ende (21) des anderen Behälters derart verbunden ist, daß nach der Montage in
einem Ölabscheider oder dergl. je ein groß- (21a) und
ein kleinvolumiges Ende (o4) über den Ölspiegel herausragt und, daß der Schnittpunkt der Verjüngung bis unterhalb des Bereiches der Wasserspiegelschwankungen (H) eingetaucht ist.

3. Vorrichtung nach Anspruch 1 und 2 dadurch gekennzeichnet,
daß das eingetauchte großvolumige Ende (21) das aufsteigende Öl aufnimmt, oder daß der großvolumige unten offene Behälter (21) im Grenzbereich der Ölschicht ($H_1$) endet, sodaß
das Öl bei Erreichen einer bestimmten Ölschichtdicke unter
den unteren Rand in den Behälter (21) gelangt und durch die
Wasserspiegelschwankungen in den Ölablauf gedrückt wird.

4. Vorrichtung nach Anspruch 1 bis 3 dadurch gekennzeichnet,
daß das verjüngte obere Ende über dem höchstmöglichen
Wasserspiegel mit einer Rohrleitung (o4) und das verjüngte
untere Ende (o9) mit dem großvolumigen Ende des anderen
Behälters verbunden wird.

- 8 -

0047535

5. Vorrichtung nach Anspruch 1 dadurch gekennzeichnet, daß der Wasserablauf mit einem auswechselbaren Zwischenflansch (o2c) ausgestattet ist, der an der Sohle des Ablaufquerschnitts eine schmale Ablaufrinne besitzt, damit der Wasserspiegel im Ruhestand absinkt und verhindert wird, daß das Öl, welches sich vor dem Einlauf ansammelt, in den Zulauf zurückfließt, daß durch die tiefe Lage der Ölsohle (21) durch plötzliches Anheben des Wasserspiegels bei Inbetriebnahme ein Zurückfließen des Öls aus dem Ölsammelraum (21) in den Ausgleichbehälter (21a) verhindert wird.

6. Verfahren zur Wiedervereinigung von abgetrennten Leichtflüssigkeiten, wie Öl im Wasser bei Ölabscheidern, dadurch gekennzeichnet, daß durch Anordnung von Trennwänden im oberen Teil der Ölabscheider strömungsfreie Zonen (o36) entstehen,
daß eine großdimensionierte Feinabscheiderstufe (o4o) mit quadratischem Querschnitt am Bodenablauf mit vier schiefen Ebenen (o33) mit starkem Gefälle zur Mitte ausgestattet ist, daß die Gewässer von der Vorstufe (o41) über ein quadratisches Steigrohr (o39 Fig. 1o) in der Mitte der Endstufe aufsteigen, am Auslauf (o32) von einem diagonalen Sternverteiler (o31) nach den vier Seiten (o33) verteilt und beim Überströmen die Restölteilchen mit der Ölschicht vereinigt werden, während sich die Gewässer gleichmäßig und langsam in vertikaler Richtung absetzen.

7. Vorrichtung nach Anspruch 6 dadurch gekennzeichnet, daß an Stelle des Steigrohres (o39) die Gewässer durch eine große Trennwandöffnung (o42 Fig. 9) in den oberen Teil der Endstufe (o4o) gelangen,
daß sich die Gewässer durch den einlegbaren trichterartigen Zwischenboden (o33) langsam und gleichmäßig in vertikaler Richtung absetzen, die Ölteilchen in der strömungsfreien Zone (o36) aufsteigen und sich mit der Ölschicht vereinigen.

- 9 -                                    0047535

8. Verfahren zur Verhinderung von Abwasserverschmutzung
bei Ölabscheidern und dergl. dadurch gekennzeichnet,
daß bei Störungen im normalen Ölablauf (o4) oder bei
einem Ölunfall anfallendes Öl über einen Ölsicherheitsablauf (o3) in einen Ölsammeltank fließt.

9. Vorrichtung nach Anspruch 8 dadurch gekennzeichnet,
daß der Sicherheitsablauf (o3) unter dem Öltiefstand
des Ölsammelraumes (21) beginnt, bis zur Höhe des normalen Ölablaufes (o4) steigt und von da mit Gefälle
zum Ölsammeltank verlegt ist.

1o. Vorrichtung nach Anspruch 1 bis 9 dadruch gekennzeichnet, daß die Trennwand (o37) derart abgewinkelt ist,
daß bei sinkendem Wasserspiegel eine Schöpfwirkung entsteht, so daß bei gewchsener Ölschicht Öl unter die
Glocke des Ölsammelraumes (21) gefördert wird.

Schnitt A-A

Fig.

- 1/12 -

Fig. X5

Fig. X6

Fig. X7

0047535

*Fig.* X1

*Fig.* X2

*Fig.* X3

*Fig.* X4

Ölsäulen-Höhe in Abhängigkeit der Dichte und Wasserspiegelschwankungen

— 4/12 —

7a

0,80

Ölsäule über dem Wasserspiegel

Ölsäule unter dem Wasserspiegel

0,90

0,85

6 cm Schwank.
5 cm Schwank.
4 cm Schwank.
3 cm Schwank.
2 cm Schwank.
1 cm Schwank.
0 cm Schwank.
0 cm Schwank.

6 cm Schwank.
5 cm Schwank.
4 cm Schwank.
3 cm Schwank.

6 cm "
5 cm "
4 cm "
3 cm "
1 cm Schwank.

**BAD ORIGINAL**

Eisstand-Tabelle

**C.85**

| Üb. Wassersp. | unter Wassersp. | total Wassersp. | cm |
|---|---|---|---|
| 0,5 | 2,83 | 3,33 | |
| 1,0 | 5,66 | 6,66 | |
| 1,5 | 8,50 | 10,00 | |
| 2,0 | 11,33 | 13,33 | |
| 2,5 | 14,16 | 16,66 | |
| 3,0 | 17,00 | 20,00 | |
| 3,5 | 19,83 | 23,33 | |
| 4,0 | 22,66 | 26,66 | |
| 4,5 | 25,5 | 30,00 | |
| 5,0 | 28,33 | 33,33 | |
| 5,5 | 31,16 | 36,66 | |
| 6,0 | 34,00 | 40,00 | |

**C.90**

| | | |
|---|---|---|
| 0,5 | 4,5 | 5,00 |
| 1,0 | 9,0 | 10,00 |
| 1,5 | 13,5 | 15,00 |
| 2,0 | 18,0 | 20,00 |
| 2,5 | 22,5 | 25,00 |
| 3,0 | 27,0 | 30,00 |
| 3,5 | 31,5 | 35,00 |
| 4,0 | 36,0 | 40,00 |

**0.80**

| | | |
|---|---|---|
| 0,5 | 2 | 2,5 |
| 1,0 | 4 | 5,0 |
| 1,5 | 6 | 7,5 |
| 2,0 | 8 | 10,0 |
| 2,5 | 10 | 12,5 |
| 3,0 | 12 | 15,0 |
| 3,5 | 14 | 17,5 |
| 4,0 | 16 | 20,0 |
| 4,5 | 18 | 22,5 |
| 5,0 | 20 | 25,0 |
| 5,5 | 22 | 27,5 |
| 6,0 | 24 | 30,0 |
| 6,5 | 26 | 32,5 |
| 7,0 | 28 | 35,0 |

**BAD ORIGINAL**

bis 0,90 Dichte

im Betrieb bei

| cm | m/s | l/s |
|---|---|---|
| 7,0 | 0,65 | 9,2 |
| 6,5 | 0,60 | 7,5 |
| 5,5 | 0,50 | 4,5 |
| 4,5 | 0,40 | 2,2 |
| 3,5 | 0,30 | 0,7 |

im Ruhestand

$H_1$

$H$

$h$

$\frac{70}{350}$

3

2

4

1

DN 150

bei h/d 0,5 x 0,88 m/s = 7,7 l/s

$H_1$ max.-Höhe bei 9,2 L/S

15 cm/s

$H_1$ max.-Tiefe bei 0,675 L/S

ca. 800/800

0,5 cm/s

ca. 400

ca. 1.200 / 1.200

Fig. 37

0047535

Fig. 1

0047535

Fig.2

SCHNITT A-A

Fig. 10

Schnitt **B-B**

Fig. 10 a

0047535

Fig. 11

Fig. 9

Schnitt A-A

0047535

FIG. 9 a

FIG. 9 b